# EUROPEAN PATENT APPLICATION

(11) **EP 0 657 856 A1**
(43) Date of publication of application: **14.06.1995**
(21) Application number: 94203436.4
(22) Date of filing: 25.11.1994
(51) Int. Cl.: G07G 1/00, A47F 9/04

(54) **Integrated anti-theft and checkout system, and method for checking out articles with the aid of such system**

(30) Priority: 25.11.1993 NL 9302036
(71) Applicant: N.V. Nederlandsche Apparatenfabriek NEDAP, NL-7141 DE Groenlo (NL)
(72) Inventor: Hogen Esch, Johannes Harm Lukas, NL-7122 ZN Aalten (NL)
(74) Representative: Smulders, Theodorus A.H.J., Ir.

(57) **Abstract**

Disclosed is an integrated anti-theft and checkout system for checking out articles which comprise an anti-theft label. The system comprises input means by which an article code of at least one article to be checked out can be recorded for checking out that article and deactivation means for deactivating the anti-theft label of an article which has been checked out. According to the invention, the system further comprises sensor means by which measurable characteristics such as the mass and/or the shape of at least one article can be measured and a check unit which verifies whether an inputted article code corresponds with the characteristics of an article as measured by the sensor means, the check unit activating the deactivation means for deactivating the anti-theft label of the article when the inputted article code corresponds with the measured characteristics. The invention also relates to a method for checking out articles using such system.

## Description

This invention relates to an integrated anti-theft and checkout system for checking out articles which comprise an anti-theft label, the system comprising input means by which an article code of at least one article to be checked out can be recorded for the purpose of checking out that article and deactivation means for deactivating the anti-theft label of an article which has been checked out.

Such a system is known, for instance, from international patent application 9020785. In that system, so-called bar codes provided on the articles are used to identify these articles for checking them out at the checkout system. After the bar codes have been read out, the anti-theft labels provided on the articles are deactivated, so that no alarm is given anymore if these articles leave the store in which the checkout system is used by way of an anti-theft gate. In these existing systems, all labels located in the electromagnetic field generated by the deactivator are deactivated. This means that several articles can be deactivated simultaneously without all of the bar codes having been recorded and processed by the checkout system. This makes it possible for operator staff to deactivate articles without the articles being checked out or recorded, which phenomenon is sometimes referred to as 'sweethearting'. The object of the present invention is to provide a solution to this problem by effecting a coupling between the deactivation and the registration of articles.

To that end, a system according to the invention comprises sensor means by which measurable characteristics such as the mass and/or the shape of at least one article can be measured and a check unit which verifies whether an inputted article code corresponds with the characteristics of an article as measured by the sensor means, the check unit activating the deactivation means for deactivating the anti-theft label of the article when the inputted article code corresponds with the measured characteristics.

By virtue of the above measures, an anti-theft label of an article can be deactivated only when the article code of the article in question has been inputted into the checkout system for the purpose of the checkout transaction. When for whatever reason it is attempted, for instance, to deactivate the labels of two articles simultaneously while the article code of only one of the two articles has been inputted, no deactivation will take place since the measured characteristics of the two articles together do not match the inputted article code.

More particularly, the check unit determines measurable characteristics of an article on the basis of the article code and compares them with the characteristics of an article as measured by the sensor means, for performing the verification referred to.

According to a further elaboration of the invention, the check unit comprises a memory in which a number of measurable characteristics of articles and an associated article code are stored, and the check unit compares the measurable characteristics of an article as selected from the memory on the basis of the article code with the characteristics of an article as measured by the sensor means, for performing the verification referred to. Accordingly, here the article code itself need not comprise any information about the measurable characteristics of the article in question.

More particularly, the check unit records an article code with associated characteristics of an article as measured by the sensor unit in the memory when the relevant article code and/or the associated measurable characteristics have not yet been stored in the memory. The system according to the invention has thus acquired a self-learning function, whereby, for instance, the weights of the articles in a reference table in the memory are automatically adjusted, within certain margins, to the measured weights of these articles. It is also possible for the article whose weight is still entirely unknown to the system to be simply sold without the verification referred to, whereafter the weight will be known to the system the next time the same article is being checked out. Thus it is not necessary to input all measurable characteristics in the memory beforehand because the checkout system will automatically adjust to the presented information about the measurable characteristics.

According to an alternative embodiment, an article code itself comprises information about the measurable characteristics of an article, and the check unit derives the information about the measurable characteristics of an article from the inputted article code and compares the information with the measured characteristics of an article for performing the verification referred to.

Preferably, the check unit activates the deactivation unit when the measurable characteristics of an article as determined on the basis of the article code are equal, within predetermined limits, to the characteristics of an article as measured by the sensor means. Because the characteristics of the same kind of articles may differ slightly from one article to another, the differences that may occur being mostly stochastically determined, it is possible to fix limits within which the measured characteristics should be equal to the measurable characteristics as determined on the basis of the article code.

According to a particular embodiment of the system, the input means, the sensor means and the deactivation means are so positioned relative to each other that in use the input of the article code, the measurement of the characteristics and the deactivation of the anti-theft label of an article can be performed without displacing that article. Thus the checkout of an article can be performed particularly fast and efficiently. In particular, in use the deactivation and the measurement of the characteristics of an article are performed at least substantially simultaneously. The system has thus been rendered completely fraud-proof in a simple manner.

A method for checking out articles comprising an anti-theft label at an integrated anti-theft and checkout system, in which with the aid of input means at least one article code of at least one article is inputted into the checkout system and in which with the aid of deactivation means an anti-theft label of at least one article which has been checked out is deactivated, is characterized by measuring measurable characteristics such as the mass and/or the shape of at least one article by means of sensor means, verifying whether an inputted article code corresponds with the characteristics of the article as measured by the sensor means, and deactivating the anti-theft label of the article when the article code corresponds with the measured characteristics.

The invention is explained in further detail with reference to the drawing. In the drawing:
Fig. 1 shows a first embodiment of an integrated anti-theft and checkout system according to the invention; and
Fig. 2 shows an alternative embodiment of an integrated anti-theft and checkout system according to the invention.

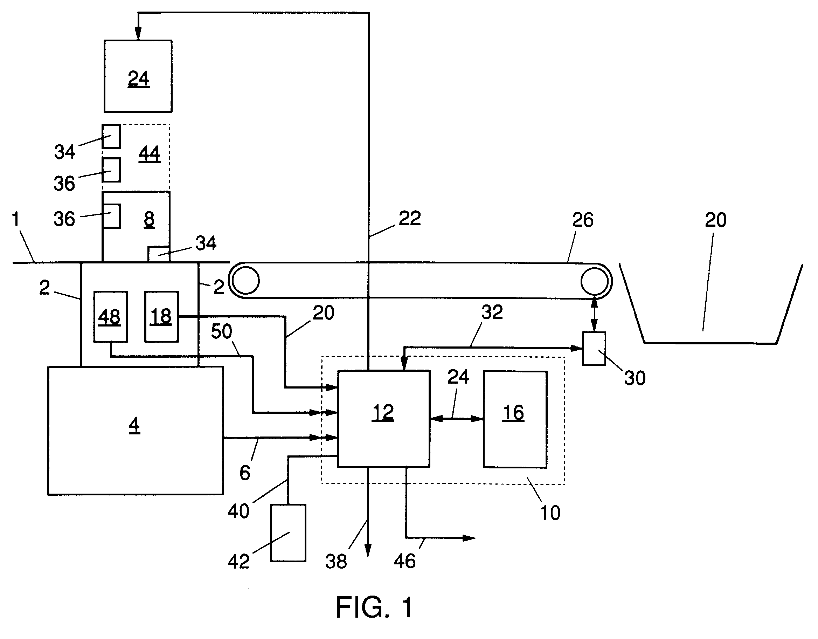

The checkout system according to Fig. 1 comprises a glass plate 1 on which an article to be checked out is to be positioned. The glass plate 1 is carried, through supports 2, by sensor means in the form of an electrical weighing device 4. The electrical weighing device 4 is calibrated in such a manner that signals are generated on line 6 which correspond with the weight of the article 8 positioned on the glass plate 1 and to be checked out. The signals on line 6 are fed to a check unit 10. In this example, the check unit 10 is composed of a microprocessor 12 and a memory 16 coupled thereto via line 14. In this example, line 6 is connected directly to the microprocessor 12.

The system further comprises input means in the form of, for instance, a bar code reader 18 which is connected with the microprocessor 12 via line 20. The microprocessor 12 is additionally connected with a deactivation unit 24 through line 22. The system further comprises a conveyor unit 26 for carrying off articles which have been checked out to a receptacle 28. The speed of the conveyor unit 26 can be set by a control unit 30 which is connected with the microprocessor 12 through line 32.

The checkout system according to Fig. 1 is designed to cooperate with an article 8 which comprises an article code which can be recorded by the input means 18, in this case a bar code reader. Accordingly, the article code of this example will be a bar code. The article 8 further comprises an anti-theft detection label, which is known per se and which, provided it is not deactivated, can be detected, for instance by an anti-theft gate in a (department) store.

The operation of the system is as follows. The article 8 to be checked out is placed on the glass plate 1. The weight as measured by the weighing device will increase by the magnitude of the weight of the article 8 which has been placed on the glass plate 1. The microprocessor 12 determines the weight of the article 8 on the basis of the change in the signal which the weighing device 4 feeds to the microprocessor via line 6. In this example the article 8 should be positioned on the glass plate in such a manner that the bar code reader 18 can read the bar code 34 present on the article. The thus obtained bar code of the article 8 is fed to the microprocessor 12 via line 6. In this example the memory 16 comprises information about measurable characteristics of articles and their associated article code, in this case a bar code. In this example the measurable characteristics of the articles concern the weight of the various articles. On the basis of the bar code of the article 8 disposed on the glass plate 1, the microprocessor 12 selects a location in the memory where the weight of such an article is stored. Then the microprocessor 12 compares the weight selected from the memory 16 with the weight of the article 8 as actually measured. If the two values correspond with each other within certain limits, it is certain that only one article is located on the glass plate 1. In that case the microprocessor 12 will actuate the deactivation unit 24 via line 22 in order for an anti-theft label 36 of the article 8 to be deactivated. Also, the bar code 34 scanned by the bar code reader 18 is further processed by the check unit 10 for the purpose of the payment for the article in known manner. To that end, the microprocessor 12 generates signals on line 38 which, for instance, are fed to a display and/or a printer unit (neither being shown) for printing a receipt. Then the article 8 can be placed on the conveyor unit 26 to be carried off to the receptacle 28. To that end, the system may for instance further comprise a tone generator 42 which is connected to the microprocessor 12 through line 40. The microprocessor 12 will then generate a signal which is audible to the operator staff, indicating that the article 8 can be placed on the conveyor unit 26.

If in addition to the article 8 another article 44 is placed on the glass plate 1, the weighing device 4 will measure a weight which is the sum of the weight of the article 8 and the article 44. As described hereinbefore, the microprocessor 12 will determine the sum of the weight of the articles 8 and 44 on the basis of the signal generated by the weighing device 4 on line 6. If the second article 44 is so positioned that a bar code 34 of the article 44 cannot be detected by the bar code reader 18, the consequence will be that only the bar code 34 of the article 8 is fed to the microprocessor 12. On the basis of this single bar code, the microprocessor 12 will accordingly select from the memory 16 a magnitude of a weight which corresponds with the weight of the article 8 alone. All this means that the weight of the articles as measured on the glass plate 1 will not correspond with the weight selected from the memory 16. Accordingly, the microprocessor 12 will not generate any signal on line 22 and so the deactivation unit 24 will not be activated. The result is that neither the anti-theft detection label 36 of article 8 nor that of article 44 will be deactivated. This precludes the possibility of the non-scanned article 44 leaving the department store by way of the theft gate referred to without an alarm going off.

In this example, the microprocessor 12 will deliver a signal via line 32, which will deactivate the control unit 30. As a result, the conveyor unit 26 will come to a standstill. For the operator staff this is an indication that the bar code of the article 44 has not been read, which allows this situation to be remedied, for instance by removing the article 44 and checking out the article 8 first. Also, when the measured weight does not correspond with the weight selected from the memory 16, a signal can be generated by means of tone generator 42 for the operator staff. In addition, the microprocessor can produce a signal, for instance through line 46, to a space of a department store where management staff are present.

According to an advanced embodiment of the system, it is also possible to check out two or more articles at the same time. However, a requirement is that the bar code reader 18 can read all bar codes of the articles 8, 44 placed on the plate 1. If, accordingly, the bar code reader 18 is capable of reading the bar code of the article 8 as well as the bar code of the article 44, both bar codes can be fed to the microprocessor 12. On the basis of these bar codes, the microprocessor 12 will then select two weights from the memory 16 and add them up. If the sum of the two weights corresponds with the sum of the weights measured by the weighing device 4, the deactivation unit 24 will be activated and deactivate the anti-theft labels of the two articles 8 and 44. Further, the payment for the two articles will be settled in the known manner.

According to a particular embodiment of the system, the sensor means comprise a video camera 48 by which the shape of the article 8 placed on the glass plate 1 can be detected. The signals generated by the video camera 48 are fed to the microprocessor 12 via line 50. In this case the memory 16 comprises information about the shape of various articles and the associated bar codes. On the basis of the bar code 34 scanned by the bar code reader 18, the microprocessor 12 will select the shape of the article in question from the memory and compare it with the shape of the article as measured by the video unit 48, for performing the verification.

If the information about the shape as selected from the memory 16 corresponds with the measured shape of the article, the deactivation unit 24 will be activated via line 22. If, on the other hand, it is found that the measured shape differs from the shape selected from the memory 16, the tone generator 42 will be activated as described hereinabove. Also, the conveyor unit 26 can be stopped and a signal can be delivered to the space of the management staff. In this embodiment, the weight of an article 8 does not play any role and the weighing device 4 can therefore be omitted.

It will be clear that it is also possible to check both the shape and the weight of the articles positioned on the glass plate 1. In that case, both the shape and the weight of the articles placed on the glass plate 1 are determined. If both the shape and the weight correspond with the measurable characteristics of the article as selected from the memory 16 on the basis of the article code, the deactivation unit 24 will be activated. However, if there is a discrepancy between the measured shape and/or weight on the one hand and the shape and/or weight selected from the memory on the other, the deactivation unit 24 will not be activated and the microprocessor 12 will deliver signals such as described hereinbefore.

According to an alternative embodiment of the system according to the invention, the bar code 34 of an article comprises information about the measurable characteristics of the article, such as its weight and its shape. If a detected bar code 34 is fed to the microprocessor 12 via line 20, it will be possible for the microprocessor 12, on the basis of a predetermined logarithm, to derive the measurable characteristics of the article from the bar code. In that case this information need not be selected from the memory 16. As described above, the measurable characteristics of the article can then be compared with the characteristics of the article as measured by the sensor means, in this example the weighing device 4 and/or the video unit 48. The further operation of the system is entirely analogous to that described hereinabove.

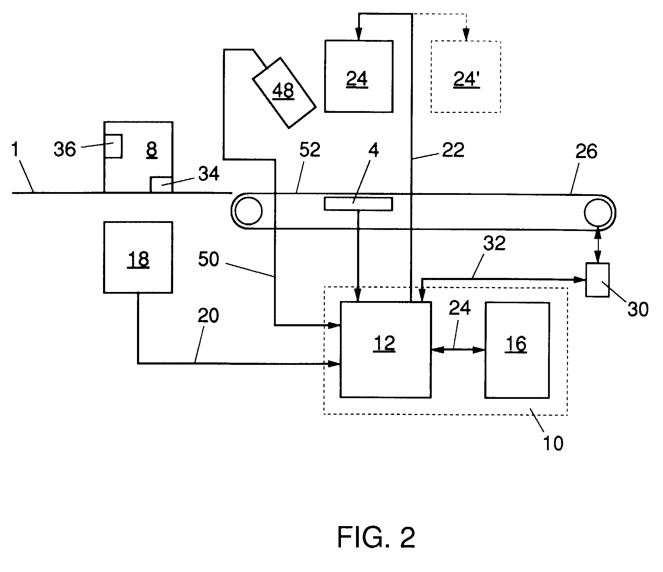

Fig. 2 shows a possible alternative embodiment of a system according to the invention. Corresponding parts in Figs. 1 and 2 have been given the same reference numerals.

In the system according to Fig. 2, the weighing device 4 has now been placed under an upper belt 52 of the conveyor unit 26 so that an article disposed on the conveyor unit 26 can be weighed by the weighing device 4. The deactivation unit 24 and the video camera 48 have been arranged above the weighing device 4, so that in use the deactivation and the measurement of the characteristics of the article can be performed at one and the same position.

The operation of the system will be briefly discussed hereinafter. An article 8 to be checked out is first moved along the glass plate 1 to allow the bar code reader 18 to read the bar code 34 of the article. Then the article 8 is placed on the conveyor unit 26. The conveyor unit 26 will convey the article 8 to the weighing device 4. When the article 8 has arrived at the weighing device 4, the weighing device 4 and/or the video unit 48 will measure the weight and/or the shape of the article 8, respectively. All this means that the bar code reader functioning as input means and the weighing device and video unit functioning as sensor means are positioned relative to each other in such a manner that in use the article, for the purpose of inputting an article code, is located at a position different from the position where the article is located when the characteristics of the article are measured. As discussed above, on the basis of the detected bar code, the microprocessor 12 selects the measurable characteristics of the article from the memory 16.

Then the microprocessor 12 compares the information selected from the memory 16 with the measured characteristics of the article. If the measurable characteristics of the article as selected from the memory are equal, within predetermined limits, to the measured characteristics of the article, the deactivation unit 24 is actuated via line 22, so that the anti-theft detection label of the article in question will be deactivated. In this embodiment, the deactivation means are positioned in such a manner that in use the deactivation and the measurement of the characteristics of the articles can be performed at least substantially simultaneously.

In particular, the microprocessor 12 can temporarily stop the conveyor unit by way of line 32 in order that a reliable measurement of the measurable characteristics of the article can be performed. After this measurement has been performed and the detection label of the article in question has been deactivated, the conveyor unit 26 can be activated again until a next article has reached the weighing device 4.

It is noted that it holds both for the system according to Fig. 1 and for the system according to Fig. 2 that the deactivation means are so positioned that in use the deactivation and the measurement of the characteristics of the article are performed at one and the same position. It also holds for both variants that in use the deactivation and the measurement of the characteristics of the article are performed at least substantially simultaneously.

It is further noted that many variants of the system according to Figs. 1 and 2 which are obvious to a person of ordinary skill in the art are understood to fall within the scope of the invention.

Thus, the deactivation means can be positioned such that the article, for the purpose of deactivation of the label, is located at a different position from the respective positions where the article is located when the article code is inputted and the characteristics are measured. In that case, the deactivation and the measurement of the characteristics of the article will not take place simultaneously nor be performed at one and the same position.

In the system according to Fig. 2, this can, for instance, be realized by eliminating the deactivation unit 24 while instead a deactivation unit 24' is used. This deactivation unit 24' is located downstream of the position where characteristics of the article in question are measured. If the microprocessor 12, as described hereinbefore, has established that the measured characteristics of an article correspond with the bar code of a scanned article, the deactivation unit 24' will be activated at the time when the article in question is located under the deactivation unit 24'. To that end, the speed of the conveyor unit 26 is fed to the microprocessor 12 by way of line 32. Because the microprocessor 12 knows when the article in question has been detected by the weighing device 4 and/or the video unit 48, it can be calculated in a simple and known manner at what time the article will be located under the deactivation unit 24'.

It holds both for the embodiment according to Fig. 1 and for the embodiment according to Fig. 2 that the system can have a self-learning function, whereby the measurable characteristics of the articles which are stored in the memory 16 are automatically adjusted, within certain margins, to the measured characteristics of these articles.

It is also possible for an article whose measurable characteristics have not been stored in the memory yet, to be simply sold without performing the verification referred to. In that case, the measured characteristics of the article in question are stored in the memory upon the first measurement, together with the bar code of the article. Thus it is not necessary for all measurable characteristics of the article to be inputted into the memory beforehand because the system will then automatically adjust to the measured characteristics of the article. Also, an article code can be part of the anti-theft label. In that case the input means will comprise a transmitter and receiver device, known as such, for reading out the label. These variants are all considered to fall within the scope of the invention.

## Claims

1. An integrated anti-theft and checkout system for checking out articles which comprise an anti-theft label, said system comprising input means by which an article code of at least one article to be checked out can be recorded for the purpose of checking out that article and deactivation means for deactivating the anti-theft label of an article which has been checked out,
characterized in that the system further comprises sensor means by which measurable characteristics such as the mass and/or the shape of at least one article can be measured and a check unit which verifies whether an inputted article code corresponds with the characteristics of an article as measured by the sensor means, the check unit activating the deactivation means for deactivating the anti-theft label of the article when the inputted article code corresponds with the measured characteristics.

2. A system according to claim 1, characterized in that the check unit determines measurable characteristics of an article on the basis of the article code and compares them with the characteristics of an article as measured by the sensor unit, for the purpose of performing said verification.

3. A system according to claim 2, characterized in that the check unit comprises a memory in which measurable characteristics of a number of articles and their associated article codes are stored, while the check unit compares the measurable characteristics selected from the memory with the aid of the inputted article code with the characteristics of an article as measured by the sensor means, for the purpose of performing said verification.

4. A system according to claim 3, characterized in that the check unit records an article code with associated characteristics of an article as measured by the sensor unit in the memory when the relevant article code and/or the associated measurable characteristics have not been stored in the memory yet.

5. A system according to any one of claims 2-4, characterized in that an article code comprises information about the measurable characteristics of an article, while the check unit derives the information about the measurable characteristics of an article from the inputted article code and compares it with the measured characteristics of an article, for the purpose of performing said verification.

6. A system according to claim 2, 3, 4 or 5, characterized in that the check unit activates the deactivation unit when the measurable characteristics of an article as determined on the basis of the article code are equal within predetermined limits to the characteristics of an article as measured with the aid of the sensor means.

7. A system according to any one of the preceding claims, characterized in that the check unit generates an alarm signal when the inputted article code does not correspond with the measured characteristics of an article.

8. A System according to any one of the preceding claims, characterized in that the input means, the sensor means and the deactivation means are positioned relative to each other in such a manner that in use the input of the article code, the measurement of the characteristics and the deactivation of the anti-theft label of an article can be performed without displacing an article.

9. A system according to claims 1-7, characterized in that the input means and the sensor means are positioned relative to each other in such a manner that in use an article, for the purpose of inputting the article code, is located at a position which differs from the position where that article is located when the characteristics of the article are measured.

10. A system according to claim 9, characterized in that the deactivation means are positioned in such a manner that in use the deactivation and the measurement of the characteristics of an article are performed at one and the same position.

11. A system according to claim 9, characterized in that the deactivation means are positioned in such a manner that an article, for the purpose of deactivating the label, is located at a different position from the respective positions where that article is located when the article code is inputted and the characteristics are measured.

12. A system according to any one of claims 1-10, characterized in that in use the deactivation and the measurement of the characteristics of an article are performed at least substantially simultaneously.

13. A system according to any one of the preceding claims, characterized in that the article code is recorded on the article with symbols, input means comprising an optical reader for recording the article code.

14. A method for checking out articles comprising an anti-theft label at an integrated anti-theft and checkout system, in which with the aid of input means at least one article code of at least one article is inputted into the checkout system and in which with the aid of deactivation means an anti-theft label of at least one article which has been checked out is deactivated, characterized by measuring measurable characteristics such as the mass and/or the shape of at least one article with the aid of sensor means, verifying whether an inputted article code corresponds with the characteristics of the article as measured by the sensor means, and deactivating the anti-theft label of the article when the inputted article code corresponds with the measured characteristics.

15. A method according to claim 14, characterized in that measurable characteristics of an article are determined on the basis of the article code, and these measurable characteristics are compared with the characteristics of an article as measured by the sensor unit, for the purpose of performing said verification.

16. A method according to claim 15, characterized by a memory in which measurable characteristics of a number of articles and their associated article codes are stored, while measurable characteristics of the article as selected from the memory with the aid of the article code are compared with the characteristics of the article as measured by the sensor means, for the purpose of performing said verification.

17. A method according to claim 16, characterized in that an article code with associated characteristics of an article as determined by the sensor unit is recorded in the memory when the relevant article code and/or associated measurable characteristics have not been stored in the memory yet.

18. A method according to any one of claims 14-17, characterized in that an article code comprises information about the measurable characteristics of an article, and the information about the measurable characteristics of an article is derived from the inputted article code and is compared with the measured characteristics of an article for the purpose of performing said verification.

19. A method according to claim 15, 16, or 18, characterized in that the deactivation unit is activated when the measurable characteristics of an article as determined on the basis of the article code are equal within predetermined limits to the characteristics of an article as measured with the aid of the sensor means.

20. A method according to any one of the preceding claims 14-19, characterized in that an alarm signal is generated when the inputted article code does not correspond with the measured characteristics of an article.

21. A method according to any one of the preceding claims 14-20, characterized in that the input of an article code, the measurement of the characteristics and the deactivation of an anti-theft label of an article are performed without displacing the relevant article.

22. A method according to any one of claims 14-21, characterized in that the input of the article code is performed before the characteristics of the relevant article are measured.

23. A method according to any one of claims 14-22, characterized in that the deactivation of a label is performed after performing said verification and at least substantially simultaneously with the measurement of the characteristics of the relevant article.

24. A method according to any one of the preceding claims 14-23, characterized in that the article code is recorded on the article with symbols, an optical reader being used for inputting the article code.
